# EUROPÄISCHE PATENTSCHRIFT

(11) **EP 2 977 741 B1**
(45) Veröffentlichungstag und Bekanntmachung des Hinweises auf die Patenterteilung: **29.11.2017**
(21) Anmeldenummer: 15177639.0
(22) Anmeldetag: 21.07.2015
(51) Int. Cl.: G01N 1/20, G01N 1/22, G01N 1/24

(54) **VORRICHTUNG ZUR ENTNAHME EINER PROBE UND ZUR ZUFÜHRUNG IN EIN ANALYTISCHES AUSWERTESYSTEM**
DEVICE FOR TAKING A SAMPLE AND FOR FEEDING IT INTO AN ANALYTICAL EVALUATION SYSTEM
DISPOSITIF DE PRELEVEMENT D'UN ECHANTILLON ET D'INTRODUCTION DANS UN SYSTEME D'EVALUATION ANALYTIQUE

(30) Priorität: 25.07.2014 DE 102014110544
(43) Veröffentlichungstag der Anmeldung: 27.01.2016
(73) Patentinhaber: Leibniz - Institut für Analytische Wissenschaften - ISAS - e.V., 44139 Dortmund (DE)
(72) Erfinder: Vautz, Dr., Wolfgang, 59425 Unna (DE); Röper, Peter, 44141 Dortmund (DE); Seifert, Luzia, 44379 Dortmund (DE)
(74) Vertreter: Meinke, Jochen

(56) Entgegenhaltungen:
- DE-A1- 19 937 026
- DE-B3- 10 333 331
- DE-C2- 3 920 949
- US-A- 2 388 662
- US-B1- 6 419 127

## Beschreibung

Die Erfindung betrifft eine Vorrichtung zur Entnahme einer Probe aus wenigstens einem fluiden System und zur Zuführung der wenigstens einen entnommenen Probe in ein analytisches Auswertesystem.

Aus DE 39 20 946 C2 ist eine Vorrichtung zur Entnahme einer Probe aus wenigstens einem fluiden System und zur Zuführung der wenigstens einen entnommenen Probe in ein analytisches Auswertesystem mit wenigstens einem Probenahmezylinder mit daran geführtem Probenahmenkolben bekannt.

DE 10 2004 04 342 A1, US 5 088 335 A, US 5 717 131 A, US 6 419 127 B1, DE 100 61 725 B4, US 2 388 662 A, DE 41 25 141 C2, DE 199 37 026 A1, EP 0 022 654 A1 und US 5 736 654 A zeigen verschiedene weitere Vorrichtungen zur Entnahme von fluiden Proben.

Die Entnahme von fluiden Proben aus einem gasförmigen oder flüssigen fluiden System, bei welchem es sich um ein strömendes oder stationäres Volumen handeln kann, und die nachfolgende Zuführung zu einem analytischen Auswertesystem, z.B. einem Massenspektrometer oder einem Ionenmobilitätsspektrometer, vorzugsweise mit einer Vortrennung (z.B. mittels Gaschromatographie, Flüssigchromatographie oder Elektrophorese), ist für viele Anwendungen, z.B. Prozesskontrolle, Diagnostik aus der Atemluft, Headspaceanalytik und vieles mehr, von großer Bedeutung.

Dazu wird im einfachsten Fall mittels einer Spritze oder dergleichen eine Fluidprobe aus dem fluiden System entnommen, ggf. angereichert und in ein Labor transportiert, wo es in ein Analysesystem überführt wird. Dieses Vorgehen ist zeitaufwändig und kostenintensiv, das Analyseergebnis liegt oft erst mit deutlichem zeitlichen Verzug (Stunden bis Tage) vor. Daher werden zunehmend quasi Online-Verfahren eingesetzt. So wird z.B. eine Probe aus einem Volumen oder Volumenstrom beispielsweise mit einer Pumpe in ein Probenvolumen gezogen und dieses dann mittels eines Trägerflusses in die Vortrennung des Analysesystems injiziert. Ein solches Verfahren ist zwar deutlich schneller, erfordert aber das Spülen des Probenvolumens für eine angemessene Zeit, um das vorher vorhandene Volumen zu verdrängen, sowie ein Einspülen des Probenvolumens in die Vortrennung. Dies entspricht im Prinzip einer exponentiellen Verdünnung der Probe (Ausspülen einer hohen Anfangskonzentration, was zu einer exponentiellen Konzentrationsabnahme führt) beim Injizieren mit der Folge, dass die Signale verschleppt werden oder bei einem Abbruch des Einspülvorganges nach einer gewissen Zeit ein Verlust eines Teils der Probe eintritt.

Aufgabe der Erfindung ist es, eine Lösung zu schaffen, mit der eine schnelle Probenahme aus einem fluiden System ohne einen Spülvorgang des Probenvolumens und eine schnelle und verlustfreie Injektion der Probe in das analytische Auswertesystem gewährleistet wird.

Diese Aufgabe wird durch eine Vorrichtung mit den Merkmalen des Patentanspruches 1 gelöst.

Die Funktionsweise der Vorrichtung ist dabei wie folgt:
Das 3-Wege-Ventil, der steuerbare Antrieb und das Absperrventil sind so miteinander gekoppelt, dass zur Probenahme das 3-Wege-Ventil den Weg der Entnahmeleitung aus dem fluiden System zum Probenahmezylinder freigibt, das Absperrventil für die Spülgaszuführung geöffnet ist und der steuerbare Antrieb den Kolben aus dem Zylinder herauszieht, so dass der Probenahmezylinder spritzenartig wirkt und die Probe aus dem fluiden System in den Probenahmezylinder saugt. Nach Füllung des Probenahmezylinders wird zur Probenaufgabe in das analytische Auswertesystem das Absperrventil geschlossen, das Mehrwegeventil so geschaltet, dass der Weg vom Probenahmekolben in die Zuführleitung freigegeben ist und dass der steuerbare Antrieb den Probenahmekolben wieder vollständig in den Probenahmezylinder einschiebt, wodurch die Probe in das analytische Auswertesystem gefördert wird.

Auf diese Weise dauert die Entnahme der Probe und die Zuführung derselben zum analytischen Auswertesystem, je nach Design und Größe des Probenahmezylinders und Probenahmekolbens, in jedem Falle deutlich unter 1 Sekunde, ggf. sogar nur wenige Millisekunden. Dabei wird das komplette Probenvolumen sozusagen als Paket in äußerst kurzer Zeit in das analytische Auswertesystem oder dessen Vortrennung gedrückt, so dass gegenüber einer herkömmlichen Einspülung mit einem Trägergas eine höhere Maximalkonzentration mit der damit verbundenen besseren Nachweisstärke gewährleistet ist. Ferner wird auch das Tailing verringert, die Halbwertsbreite der Signale in der Retentionszeit wird also reduziert und damit eine bessere Trennung mit höherer Selektivität erreicht.

In besonders bevorzugter Ausgestaltung ist vorgesehen, dass der steuerbare Antrieb als Kolben-/Zylindereinheit ausgebildet ist, deren Kolbenstange mit der Kolbenstange des Probenahmekolbens verbunden ist, wobei der Zylinder der Kolben-/Zylindereinheit beiderseits des Kolbens jeweils einen Druckmittelanschluss aufweist, weicher jeweils über ein gemeinsames 3-Wege-Ventil mit einer Druckmittelquelle verbunden ist. Bei der Probenahme wird das 3-Wege-Ventil dann so geschaltet, dass derjenige Druckmittelanschluss des Kolbens mit der Druckmittelquelle verbunden ist, welcher bewirkt, dass der Kolben in Richtung entgegengesetzt zum Probenahmekolben bewegt wird, zur Probenaufgabe wird über das 3-Wege-Ventil der Weg von der Druckmittelquelle zum anderen Druckmittelanschluss freigegeben, so dass der Kolben in Richtung zum Probenahmekolben bewegt wird und somit die Probe in das analytische Auswertesystem gedrückt wird.

Diese Ausgestaltung des steuerbaren Antriebs ist besonders bevorzugt und erlaubt eine äußerst schnelle Entnahme einer Probe und Zuführung derselben zum analytischen Auswertesystem. Außerdem ist der apparative Aufwand und der Steuerungsaufwand sehr gering, da nur zwei 3-Wege-Ventile und ein Absperrventil (Einwegeventil) benötigt wird.

Dabei kann als Druckmittelquelle z.B. herkömmliche Druckluft verwendet werden, die üblicherweise ohnehin zur Verfügung steht. Der Druckluftverbrauch ist dabei äußerst gering und fällt nicht ins Gewicht.

Bevorzugt ist dabei vorgesehen, dass der Kolben der Kolben-/Zylindereinheit und der Probenahmekolben eine gemeinsame Kolbenstange aufweisen.

Alternativ kann der steuerbare Antrieb auch anders ausgeführt sein, beispielsweise als elektrisch betätigter Kolben oder dergleichen.

Es ist auch möglich, die Vorrichtung so zu modifizieren, dass mehrere Probenvolumina parallel mittels einer oder mehrerer pneumatischer Kolben betrieben werden, beispielsweise zur simultanen abwechselnden Probenahme, (feuchter) Spülung und Trocknung.

Dazu ist vorgesehen, dass mehrere Probenahmezylinder mit Probenahmekolben vorgesehen sind, welche jeweils über ein eigenes 3-Wege-Ventil mit einem eigenen fluiden System und der Zuführleitung verbunden sind.

Alternativ kann vorgesehen sein, dass der Probenahmezylinder mit Probenahmekolben über ein Mehrwegeventil mit mehreren fluiden Systemen und der Zuführleitung verbunden ist.

Die Erfindung ist nachstehend anhand der Zeichnungen beispielhaft näher erläutert. Diese zeigt jeweils in schematischer Darstellung in:
- Fig. 1: den grundsätzlichen Aufbau der Vorrichtung mit angedeutetem fluiden System und analytischem Auswertesystem,
- Fig. 2: die Vorrichtung nach Fig. 1 während der Probenahme und
- Fig. 3: die Vorrichtung nach Fig. 1 und 2 während der Zuführung der Probe in das Auswertesystem.

Eine erfindungsgemäße Vorrichtung zur Entnahme einer Probe aus wenigstens einem fluiden System 14 (z.B. ein gasförmiges oder flüssiges strömendes oder stationäres Volumen) und zur Zuführung der entnommenen Probe in ein analytisches Auswertesystem, welches beim Ausführungsbeispiel eine Vortrennung 3, z.B. durch Gaschromatographie, Flüssigchromatographie, Elektrophorese oder dergleichen und einen Analysator 4 (z.B. Massenspektrometer oder Ionenmobilitätsspektrometer) aufweist, weist beim Ausführungsbeispiel zunächst einen Probenahmezylinder 1 mit einem darin geführten Probenahmekolben 1a auf. Eine Kolbenstange 11 des Probenahmekolbens 1a ist mit einem steuerbaren Antrieb verbunden. Dieser steuerbare Antrieb ist beim Ausführungsbeispiel als Kolben-/Zylindereinheit 2 ausgebildet, welche einen Zylinder 2a und einen Kolben 2b aufweist. Die Kolbenstange des Kolbens 2b ist dabei beim Ausführungsbeispiel die Kolbenstange 11 des Kolbens 1a, d.h. sowohl der Probenahmekolben 1a als auch der Kolben 2b weisen eine gemeinsame Kolbenstange 11 auf und sind jeweils an gegenüberliegenden Enden der Kolbenstange 11 angeordnet. Der Zylinder 2a der Kolben-/Zylindereinheit 2 weist beiderseits des Kolbens 2b, d.h. am vorderen und am hinteren Ende des Zylinders 2a, jeweils einen Druckmittelanschluss 9, 10 auf, welcher jeweils über ein gemeinsames 3-Wege-Ventil 5 mit einer Druckmittelquelle 6 verbunden ist.

Der Probenahmezylinder 1 weist eine der Kolbenstange 11 abgewandte Öffnung 12 auf, welche mit einem ersten Anschluss eines 3-Wege-Ventils 7 verbunden ist. Der zweite Anschluss des 3-Wege-Ventils 7 ist über eine Entnahmeleitung 13 mit dem fluiden System 14 verbunden und der dritte Anschluss des 3-Wege-Ventils 7 ist über eine Zuführleitung 15 mit der Vortrennung 3 des analytischen Auswertesystems verbunden.

Stromabwärts des 3-Wege-Ventils 7 mündet in die Zuführleitung 15 über ein Absperrventil 8 (Einwegeventil) eine mit 16 angedeutete Spülgaszuführung.

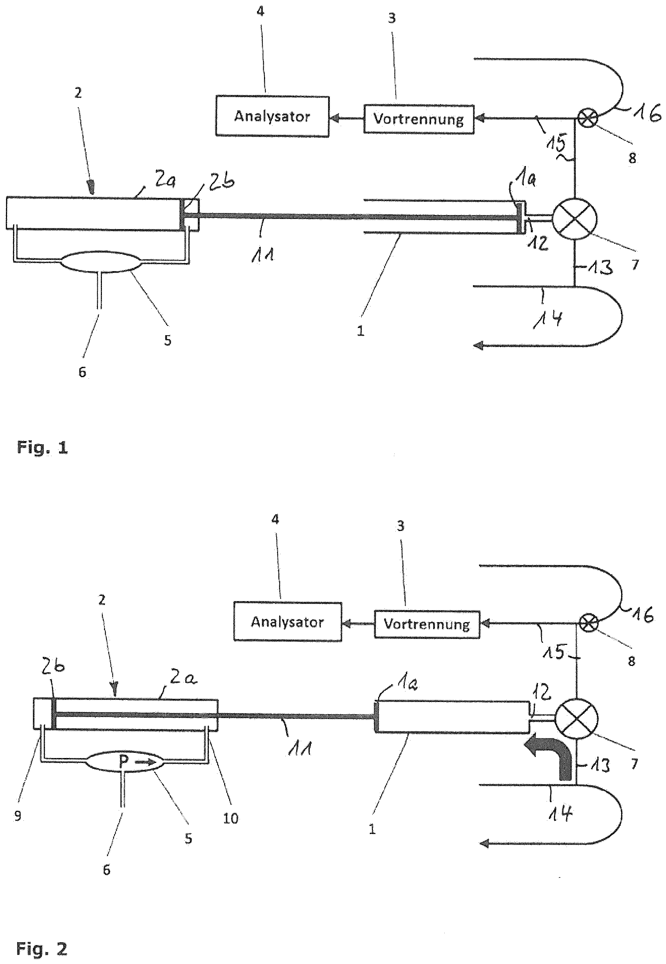

Die Funktionsweise der Vorrichtung ist wie folgt:
Zur Entnahme einer Probe aus dem fluiden System 14 ist, wie in Fig. 2 dargestellt, die Stellung der Ventile wie folgt:
   Das Absperrventil 8 ist offen, so dass Spülgas in die Vortrennung 3 gespült wird. Das 3-Wege-Ventil 7 ist so geschaltet, dass der Weg zwischen der Entnahmeleitung 13 und der Öffnung 12 des Probenahmezylinders 1 offen ist. Schließlich ist das 3-Wege-Ventil 5 so geschaltet, dass der Weg von der Druckmittelquelle 6 zum Druckmittelanschluss 10 des Zylinders 2a der Kolben-/Zylindereinheit 2 frei ist, wodurch durch den Druckmitteleintritt in den Zylinder 2a der Kolben 2b im Sinne der Fig. 2 nach links bewegt wird, d.h. die Kolbenstange 11 bewegt sich ebenfalls nach links und dementsprechend auch der Probenahmekolben 1a im Probenahmezylinder 1. Dadurch wird aus dem fluiden System 14 durch die offene Entnahmeleitung 13 eine Probe in den Probenahmezylinder 1 gesaugt, der wie eine Spritze wirkt.

In der in Fig. 2 gezeigten Endstellung ist somit der Probenahmezylinder 1 vollständig mit einer Probe gefüllt.

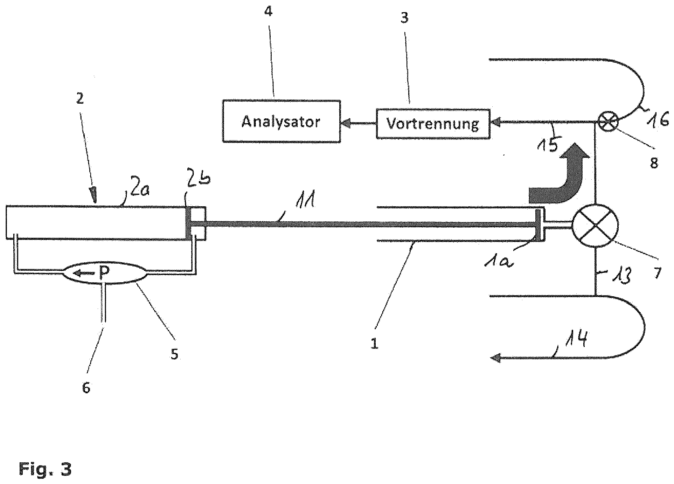

Anschließend werden gleichzeitig die drei Ventile 8, 7 und 5 in eine andere Position geschaltet, das Absperrventil 8 wird geschlossen, so dass kein Spülgas mehr in die Zuführleitung 15 gelangen kann, gleichzeitig gibt das 3-Wege-Ventil 7 den Weg von der Öffnung 12 in die Zuführleitung 15 frei und das 3-Wege-Ventil 5 gibt den Weg von der Druckmittelquelle 6 zum Druckmittelanschluss 9 frei. Dadurch bewegt sich, wie in Fig. 3 dargestellt, der Kolben 2b der Kolben-/Zylindereinheit 2 nach rechts und drückt gleichzeitig den Kolben 1a in den Probenahmezylinder 1, wodurch die darin befindliche Probe durch die Zuführleitung 15 in die Vortrennung 3 und anschließend den Analysator 4 gedrückt wird.

Auf diese Weise dauert die Probenahme und die Probenaufgabe insgesamt, je nach Design und Größe der Kolbenzylindereinheit 2 und des Probenahmekolbens 1 und dem angelegten Druck der Druckmittelquelle 6, deutlich unter 1 Sekunde, ggf. sogar nur wenige Millisekunden.

Natürlich ist die Erfindung nicht auf das dargestellte Ausführungsbeispiel beschränkt. Weitere Ausgestaltungen sind möglich, ohne den Grundgedanken zu verlassen. So kann der steuerbare Antrieb auch auf andere Weise ausgestaltet sein, z.B. als elektrischer Antrieb für die Kolbenstange 11 des Probenahmekolbens 1a. Außerdem ist es auch möglich, die Vorrichtung so zu modifizieren, dass mehrere Probenvolumina parallel mittels eines oder mehrerer Probenahmezylinder 1 und Probenahmekolben 1a betrieben werden.

### Bezugszeichenliste:

- 1: Probenahmezylinder
- 1a: Probenahmekolben
- 2: Kolben-/Zylindereinheit
- 2a: Zylinder
- 2b: Kolben
- 3: Vortrennung
- 4: Analysator
- 5, 7: 3-Wege-Ventil
- 6: Druckmittelquelle
- 8: Absperrventil
- 9, 10: Druckmittelanschluss
- 11: Kolbenstange
- 12: Öffnung
- 13: Entnahmeleitung
- 14: fluides System
- 15: Zuführleitung
- 16: Spülgaszuführung

## Patentansprüche

1. Vorrichtung zur Entnahme einer Probe aus wenigstens einem fluiden System (14) und zur Zuführung der wenigstens einen entnommenen Probe in ein analytisches Auswertesystem (3,4) mit wenigstens einem Probenahmezylinder (1) mit darin geführtem Probenahmekolben (1a), wobei eine Öffnung (12) des Probenahmezylinders (1) an einen ersten Anschluss eines 3-Wegeventils (7) angeschlossen ist, wobei der zweite Anschluss des 3-Wege-Ventils (7) über eine Entnahmeleitung (13) mit dem fluiden System (14) und der dritte Anschluss des 3-Wege-Ventils (7) über eine Zuführleitung (15) mit dem Auswertesystem (3,4) verbunden ist,
**dadurch gekennzeichnet,**
**dass** die Kolbenstange (11) des Probenahmekolbens (1a) von einem steuerbaren Antrieb in beide Richtungen bewegbar ist und dass stromabwärts des 3-Wege-Ventils (7) in die Zuführleitung (15) über ein Absperrventil (8) eine Spülgaszuführung (16) mündet, wobei das 3-Wege-Ventil (7), der steuerbare Antrieb und das Absperrventil (8) so miteinander gekoppelt sind, dass in einer ersten Stellung der Vorrichtung zur Probenahme das 3-Wege-Ventil (7) den Weg der Entnahmeleitung (13) zum Probenahmezylinder (1) freigibt, das Absperrventil (8) geöffnet ist und der steuerbare Antrieb den Probenahmekolben (1a) aus dem Probenahmezylinder (1) herausziehen kann zum Ansaugen der Probe in den Probenahmezylinder (1), und dass in einer zweiten Stellung der Vorrichtung zur Probenabgabe in das Auswertesystem (3,4) das Absperrventil (8) geschlossen ist, das 3-Wege-Ventil (7) so geschaltet wird, dass der Weg vom Probenahmekolben (1a) in die Zuführleitung (15) freigegeben ist und der steuerbare Antrieb den Probenahmekolben (1a) wieder vollständig in den Probenahmezylinder (1) einschieben kann zur Zuführung der Probe in das analytische Auswertesystem.

2. Vorrichtung nach Anspruch 1,
**dadurch gekennzeichnet,**
**dass** der steuerbare Antrieb als Kolben-/Zylindereinheit (2) ausgebildet ist, deren Kolbenstange (11) mit der Kolbenstange (11) des Probenahmekolbens (1a) verbunden ist, wobei der Zylinder (2a) der Kolben-/Zylindereinheit (2) beiderseits des Kolbens (2b) jeweils einen Druckmittelanschluss (9,10) aufweist, welcher jeweils über ein gemeinsames 3-Wege-Ventil (5) mit einer Druckmittelquelle (6) verbunden ist.

3. Vorrichtung nach Anspruch 2,
**dadurch gekennzeichnet,**
**dass** der Kolben (2b) der Kolben-/Zylindereinheit (2) und der Probenahmekolben (1a) eine gemeinsame Kolbenstange (11) aufweisen.

4. Vorrichtung nach einem oder mehreren der Ansprüche 1 bis 3,
**dadurch gekennzeichnet,**
**dass** mehrere Probenahmezylinder (1) mit Probenahmekolben (1a) vorgesehen sind, welche jeweils über ein eigenes 3-Wege-Ventil mit einem eigenen fluiden System und der Zuführleitung (15) verbunden sind.

5. Vorrichtung nach einem oder mehreren der Ansprüche 1 bis 3,
**dadurch gekennzeichnet,**
**dass** der Probenahmezylinder (1) mit Probenahmekolben (1a) über ein Mehrwegeventil mit mehreren fluiden Systemen und der Zuführleitung (15) verbunden ist.

## Claims

1. Device for removing a sample from at least one fluid system (14) and for supplying the at least one removed sample to an analytic evaluation system (3, 4) with at least one sample taking cylinder (1) with a sample taking piston (1a) guided therein, wherein an opening (12) of the sample taking cylinder (1) is connected to a first connection of a three-way valve (7), wherein the second connection of the three-way valve (7) is connected via a removal line (13) to the fluid system (14) and the third connection of the three-way valve (7) is connected via a supply line (15) to the evaluation system (3, 4),
**characterised in that**
the piston rod (11) of the sample taking piston (1a) is movable by a controllable drive in both directions and **in that** a rinsing gas supply (16) discharges into the supply line (15) via a shut-off valve (8) downstream of the three-way valve (7) wherein the three-way valve (7), the controllable drive and the shut-off valve (8) are coupled to each other such that in a first position of the device for sample taking, the three-way valve (7) unlocks the path of the removal line (13) to the sample taking cylinder (1), the shut-off valve (8) is open and the controllable drive can remove the sample taking piston (1a) from the sample taking cylinder (1) to suction the sample into sample taking cylinder (1) and **in that** in a second position of the device, in order to provide samples to the evaluation system (3, 4), the shut-off valve (8) is closed, the three-way valve (7) is switched such that the path from the sample taking piston (1a) into the supply line (15) is unlocked and the controllable drive can push the sample taking piston (1a) fully back into the sample taking cylinder (1) to supply the sample to the analytic evaluation system.

2. Device according to claim 1,
**characterised in that**
the controllable drive is configured as a piston/cylinder unit (2) whose piston rod (11) is connected to the piston rod (11) of the sample taking piston (1a), wherein the cylinder (2a) of the piston/cylinder unit (2) comprises a pressurising medium connection (9, 10) at both sides of the piston (2b), said pressurising medium connection is connected to a pressuring medium source (6) via a common three-way valve (5).

3. Device according to claim 2,
**characterised in that**
the piston (2b) of the piston/cylinder unit (2) and the sample taking piston (1a) comprise a common piston rod (11).

4. Device according to any one or a plurality of claims 1 to 3,
**characterised in that**
a plurality of sample taking cylinders (1) is provided with sample taking pistons (1a) which are each connected via a separate three-way valve to a separate fluid system and to the supply line (15).

5. Device according to any one or a plurality of claims 1 to 3,
**characterised in that**
the sample taking cylinder (1) with the sample taking pistons (1a) is connected via a multi-way valve to a plurality of fluid systems and to the supply line (15).

## Revendications

1. Dispositif de prélèvement d'un échantillon dans au moins un système fluide (14) et pour l'introduction de l'au moins un échantillon prélevé dans un système d'évaluation analytique (3, 4) avec au moins un cylindre d'échantillonnage (1) avec un piston d'échantillonnage (1a) guidé à l'intérieur,
dans lequel une ouverture (12) du cylindre d'échantillonnage (1) est raccordée à un premier raccord d'une soupape à trois voies (7),
dans lequel le deuxième raccord de la soupape à trois voies (7) est relié par l'intermédiaire d'une conduite de prélèvement (13) au système fluide (14) et le troisième raccord de la soupape à trois voies (7) est relié au système d'évaluation (3, 4) par l'intermédiaire d'une conduite d'introduction (15),
**caractérisé en ce que** la tige de piston (11) du piston d'échantillonnage (1a) peut être déplacée dans les deux sens par un dispositif d'entraînement commandable et **en ce que**, en aval de la soupape à trois voies (7), une introduction de gaz de rinçage (16) débouche dans la conduite d'introduction (15) par l'intermédiaire d'une soupape d'arrêt (8), la soupape à trois voies (7), le dispositif d'entraînement commandable et la soupape d'arrêt (8) étant couplés ensemble de telle sorte que, dans une première position du dispositif destiné au prélèvement d'échantillons, la soupape à trois voies (7) libère le chemin de la conduite de prélèvement (13) au cylindre d'échantillonnage (1), la soupape d'arrêt (8) est ouverte et le dispositif d'entraînement commandable peut tirer le piston d'échantillonnage (1a) hors du cylindre d'échantillonnage (1) pour aspirer l'échantillon dans le cylindre d'échantillonnage (1), et que, dans une deuxième position du dispositif destiné à fournir des échantillons dans le système d'évaluation (3, 4), la soupape d'arrêt (8) est fermée et la soupape à trois voies (7) est commutée de telle sorte que le trajet du piston d'échantillonnage (1a) dans la conduite d'introduction (15) est libéré et que le dispositif d'entraînement commandable peut pousser le piston d'échantillonnage (1a) à nouveau complètement dans le cylindre d'échantillonnage (1) en vue de l'introduction de l'échantillon dans le système d'évaluation analytique.

2. Dispositif selon la revendication 1, **caractérisé en ce que** le dispositif d'entraînement commandable est conçu comme une unité piston/cylindre (2) dont la tige de piston (11) est reliée à la tige de piston (11) du piston d'échantillonnage (1a), le cylindre (2a) de l'unité piston/cylindre (2) comportant des deux côtés du piston (2b) à chaque fois un raccord de fluide de pression (9, 10) qui est relié à une source de fluide de pression (6) à chaque fois par l'intermédiaire d'une soupape à trois voies (5) commune.

3. Dispositif selon la revendication 2, **caractérisé en ce que** le piston (2b) de l'unité piston-cylindre (2) et le piston d'échantillonnage (1a) comportent une tige de piston (11) commune.

4. Dispositif selon une ou plusieurs des revendications 1 à 3, **caractérisé en ce qu'**il est prévu plusieurs cylindres d'échantillonnage (1) avec pistons d'échantillonnage (1a) qui sont reliés à un système fluide particulier et à la conduite d'introduction (15) à chaque fois par l'intermédiaire d'une soupape à trois voies particulière.

5. Dispositif selon une ou plusieurs des revendications 1 à 3, **caractérisé en ce que** le cylindre d'échantillonnage (1) avec pistons d'échantillonnage (1a) est relié à plusieurs systèmes fluides et à la conduite d'introduction (15) par l'intermédiaire d'une soupape à plusieurs voies.
